# EUROPEAN PATENT SPECIFICATION

(11) **EP 3 807 799 B1**
(45) Date of publication and mention of the grant of the patent: **26.11.2025**
(21) Application number: 19768786.6
(22) Date of filing: 11.09.2019
(51) Int. Cl.: G06F 21/57

(54) **BINARY RISK EVALUATION**
BINÄRE RISIKOBEWERTUNG
ÉVALUATION DE RISQUE BINAIRE

(30) Priority: 12.09.2018 US 201816129306
(43) Date of publication of application: 21.04.2021
(73) Proprietor: BlackBerry Limited, Waterloo, Ontario N2K 0A7 (CA)
(72) Inventor: BOULTON, Adam John, Waterloo, Ontario N2K 0A7 (CA); GODWOOD, Benjamin John, Waterloo, ON N2K 0A7 (CA)
(74) Representative: Murgitroyd & Company
(86) International application number: PCT/EP2019/074227
(87) International publication number: WO 2020/053278

(56) References cited:
- US-A1- 2009 144 698
- US-A1- 2018 129 812
- XIAOBING LIANG ET AL: "Research on the Vulnerability Predicting Analysis Model for Binary Executables", 2016 10TH INTERNATIONAL CONFERENCE ON INNOVATIVE MOBILE AND INTERNET SERVICES IN UBIQUITOUS COMPUTING (IMIS), IEEE, 6 July 2016 (2016-07-06), pages 299 - 304, XP033034502, DOI: 10.1109/IMIS.2016.61
- MCCABE T J: "A Complexity Measure", IEEE TRANSACTIONS ON SOFTWARE ENGINEERING, IEEE SERVICE CENTER, LOS ALAMITOS, CA, US, vol. SE-2, no. 4, 1 December 1976 (1976-12-01), pages 308 - 320, XP002478175, ISSN: 0098-5589, [retrieved on 19761201], DOI: 10.1109/TSE.1976.233837
- SHIRANI PARIA ET AL: "BINARM: Scalable and Efficient Detection of Vulnerabilities in Firmware Images of Intelligent Electronic Devices", 8 June 2018, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 114 - 138, ISBN: 978-3-642-17318-9, XP047476598

## Description

### BACKGROUND

A binary file is a type of computer file in a computer-readable format. Rather than store data as text, a binary file stores data as a string of binary digits, such as a sequence of bytes. Computer code, in human-readable format, can be compiled into a binary file so the computer code can be executed by the computer. While not typically stored in a human-readable format, the data in a binary file can be represented as text in formats such as hexadecimal, decimal, binary, ASCII, etc.
US2018129812A1 discloses an apparatus for quantifying the security of an open-source software package and an apparatus and method for optimizing an open-source software package. The apparatus for optimizing an open-source software package includes a deletion target selection unit for creating a deletion target package list, which is a list of packages to be deleted from the total list of packages installed in a client, a package test unit for controlling the states of one or more virtual machines included in the client and receiving the result of performing a test case to which the deletion target package list is applied from the client, and a package optimization unit for creating an optimized package list based on the result of performing the test case.
Shirani Paria et al, "BINARM: Scalable and Efficient Detection of Vulnerabilities in Firmware Images of Intelligent Electronic Devices", International Conference on Financial Cryptography and Data Security, Springer, Berlin, Heidelberg discloses BinArm, a scalable approach to detecting vulnerable functions in smart grid IED firmware mainly based on the ARM architecture. The document discloses databases of vulnerabilities and firmware that are both specific to smart grid IEDs. The document discloses a multi-stage detection engine to minimize the computational cost of function matching and to address the scalability issue in handling large IED firmware. XIAOBING LIANG ET AL: "Research on the Vulnerability Predicting Analysis Model for Binary Executables",2016 10TH INTERNATIONAL CONFERENCE ON INNOVATIVE MOBILE AND INTERNET SERVICES IN UBIQUITOUS COMPUTING (IMIS), IEEE, 6 July 2016 (2016-07-06), pages 299-304, XP033034502,DOI: 10.1109/IMIS.2016.61 discloses a vulnerability analysis of binaries, using function cyclomatic complexity, nest level of loops, loop number. The vulnerability relates to the code scale and complexity of executable and use of dangerous function like memcpy, strcpy. The CVE reports on the binaries are also used.
US 2009/144698 A1 (FANNING MICHAEL C [US] ET AL) 4 June 2009 (2009-06-04) discloses a method enhancing source code quality by prioritizing changes for performance, compliance and quality. A complexity measure (cyclomatic using a count of branches including like if, while, throw, catch) to code segments is calculated using test cases (for code coverage), past source code (for improvements).

### SUMMARY

There is provided a computer, a method, and a computer program as detailed in the appended claims which are defining the invention of the present application.

### BRIEF DESCRIPTION OF THE DRAWINGS

FIG. 1 illustrates an example computer programmed to evaluate binary files for security risks.
FIG. 2 is a flowchart of an example process that may be executed by the computer to evaluate binary files for security risk.

### DETAILED DESCRIPTION

Binary files can be analyzed to determine if the binary file is likely to contain malicious computer code or computer code that makes the computer vulnerable to security risks. For certain software systems, the volume and size of software components can make it difficult to quickly navigate and prioritize where the greatest risks are likely to reside. The system described below, however, is able to more quickly assess a binary component for high risk areas of implementation.

As explained in greater detail below, binary components can be analyzed for code size, data size, the number of insecure application programming interfaces (APIs), the number of conditional statements, and the cyclomatic complexity. For example, a large code size has a larger attack surface. For data size, the number of constants and variables referenced by a function can indicate how much data processing will take place. The number of insecure APIs can indicate the risk for vulnerability based on, e.g., the number of processing strings, memory usage, and inputs/outputs used by the insecure API. Insight into the number of conditions or decisions that are being made can also indicate the security risk. Moreover, because cyclomatic complexity is a quantitative software metric that can be used to indicate the complexity of a program based on, e.g., the number of linearly independent paths through a program's source code, cyclomatic complexity can represent the likelihood of a security vulnerability in a binary. By evaluating these, and possibly other, factors, metrics representing the vulnerability of a binary file can be output.

An example computer that can predict vulnerabilities in binary files includes a memory and a processor programmed to execute instructions stored in the memory. The instructions include processing a binary file to determine a security risk associated with the binary file. Processing the binary file includes determining a characteristic from metadata of the binary file. The security risk associated with the binary file is based at least in part on the characteristic of the binary file.

The elements shown may take many different forms and include multiple and/or alternate components and facilities. The example components illustrated are not intended to be limiting. Indeed, additional or alternative components and/or implementations may be used. Further, the elements shown are not necessarily drawn to scale unless explicitly stated as such.

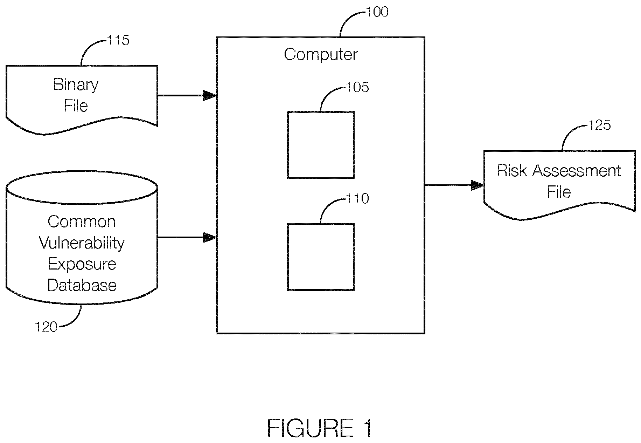

As illustrated in FIG. 1, a computer 100 includes a memory 105 and a processor 110. The computer 100 receives a binary file 115 and data from a common vulnerability exposure (CVE) database 120, processes the binary file 115 in accordance with the data stored in the CVE database 120, and outputs a risk assessment file 125 including metrics representing the vulnerability of the binary file 115. The metrics in the risk assessment file 125 output by the computer 100 represent the security risk posed by the binary file 115.

The memory 105 is implemented via circuits, chips or other electronic components and can include one or more of read only memory (ROM), random access memory (RAM), flash memory, electrically programmable memory (EPROM), electrically programmable and erasable memory (EEPROM), embedded MultiMediaCard (eMMC), a hard drive, or any volatile or non-volatile media etc. The memory 105 may store instructions executable by the processor 110 and data such as binary files 115, the CVE database 120, and the risk assessment file 125. The binary file 115 (or "binary") is a computer-readable file including data. The binary file 115 is created by compiling human-readable computer code, such as computer code written in programming languages such as C, C++, Java, etc., in a computer-readable format. The CVE database 120 is a software file including electronic data representing known security vulnerabilities associated with using certain APIs, software libraries, etc. The risk assessment file 125 is a software file that includes data representing metrics associated with the security risk posed by the binary file 115.

The processor 110 is implemented via circuits, chips, or other electronic component and may include one or more microcontrollers, one or more field programmable gate arrays (FPGAs), one or more application specific integrated circuits (ASICs), one or more digital signal processors (DSPs), one or more customer specific integrated circuits, etc. The processor 110 is programmed to access data stored in the memory 105, process the data, and generate data that can be stored in the memory 105, displayed on a computer monitor, transmitted to another computer or mobile device, etc.

The processor 110 is programmed to access metadata, stored in the memory 105, about the binary file 115. The metadata may include characteristics of the binary file 115 such as the size of the binary file 115, the amount of data processing involved with the binary file 115, the number of insecure APIs used in the binary file 115, the number of conditional statements in the code represented by the binary file 115, the cyclomatic complexity of the binary file 115, etc. In some instances, the processor 110 may be programmed to determine one or more of the characteristics by processing the binary file 115 and storing the characteristics as data or metadata in the memory 105.

The processor 110 is programmed to generate the risk assessment file 125 based on the characteristics of the binary file 115. For example, the processor 110 may be programmed to determine that a binary file 115 with a code size above a predetermined threshold is more likely to have security vulnerabilities than a binary file 115 with a code size below the predetermined threshold since, e.g., a large code size presents a larger attack surface area. The processor 110 may be programmed to consider any number of predetermined thresholds and determine the security vulnerability based on the code size relative to any one or more of the predetermined thresholds.

The processor 110 may be programmed to determine that the number of constants and variables referenced by a function can indicate how much data processing will take place. More data processing may suggest greater vulnerability. Thus, the processor 110 may be programmed to compare the number of constants and variables called by a function to one or more predetermined thresholds. The processor 110 may be programmed to determine the security risk, at least in part, based on whether the number of constants and variables exceeds one or more of the predetermined thresholds.

The processor 110 may be programmed to determine the number of insecure APIs appearing in the binary file 115. The number of insecure APIs can indicate the risk for vulnerability based on, e.g., the number of processing strings, memory usage, and inputs/outputs used by the insecure API. The processor 110 may be programmed to compare the number of processing strings, the amount of memory usage, the number of inputs/outputs, etc., to any number of predetermined thresholds. The processor 110 may be programmed to consider the number of processing strings, the amount of memory usage, the number of inputs/outputs, etc., relative to the predetermined thresholds when assessing the security risk. Further, the processor 110 may be programmed to consult the CVE database 120 to determine, e.g., known security issues associated with the APIs used in the code represented by the binary file 115.

The processor 110 may be programmed to count the number of conditions or decisions that are being made by the code represented by the binary file 115. The processor 110 may be programmed to determine that more conditions and decisions appearing in the code indicates an increased security risk. Thus, the processor 110 may be programmed to compare the number of conditions or decisions being made to any number of predetermined thresholds. The processor 110 may be further programmed to consider the number of conditions or decisions being made relative to the predetermined thresholds when determining the security risk of the binary file 115.

According to the present invention, the processor 110 is programmed to determine the cyclomatic complexity of the binary file 115. The cyclomatic complexity is a quantitative software metric that represents the complexity of the binary file 115 based on, e.g., the number of linearly independent paths through a program's source code. The processor 110 may be programmed to compare the cyclomatic complexity to a predetermined threshold and determine the security vulnerability of the binary file 115 based at least in part on the cyclomatic complexity relative to the predetermined threshold. For instance, the processor 110 may be programmed to determine that the binary file 115 is exposed to a higher security risk if, e.g., the cyclomatic complexity exceeds the predetermined threshold.

For purposes of simplicity, the processor 110 is described as being programmed to compare each characteristic to one or more predetermined threshold. In practice, the processor 110 may be programmed to compare each characteristic to any number of predetermined thresholds. Further, in some instances, one or more of the predetermined thresholds may be variable. For example, the predetermined threshold may be another characteristic, a function of another characteristic, or some other value.

The processor 110 may be programmed to generate the risk assessment file 125 according to the security risk posed by the binary file 115 in view of the characteristics, the data from the CVE database 120, or a combination of both. That is, the processor 110 may determine metrics defining how vulnerable the binary file 115 is to a security threat. The processor 110 may generate the risk assessment file 125 to reflect the metrics, the vulnerability of the binary file 115 to a security threat, or both. The processor 110 may be further programmed to store the metrics and risk assessment file 125 in the memory 105, display the metrics, output the risk assessment file 125, etc. Outputting the risk assessment file 125 may include electronically transmitting the risk assessment file 125 via a wired or wireless network, storing the risk assessment file 125 to a memory storage device (such as a flash drive) connected to the computer 100, etc.

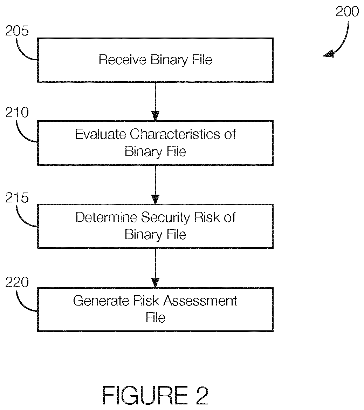

FIG. 2 is a flowchart of an example process 200 that may be implemented by one or more components of the computer 100 of FIG. 1. The process 200 may begin any time the computer 100 is operating and ready to process a binary file 115.

At block 205, the computer 100 receives the binary file 115. As explained above, the binary file 115 is a computer-readable file including data. The binary file 115 is created by compiling human-readable computer code, such as computer code written in programming languages such as C, C++, Java, etc., in a computer-readable format. The processor 110 may receive the binary file 115 after it is provided to or generated by the computer 100, and the processor 110 may execute instructions to store the binary file 115 in the memory 105. In some instances, the processor 110 may execute instructions to generate the binary file 115 by, e.g., compiling computer code already stored in the memory 105. In other instances, the binary file 115 may be received at the computer 100 via, e.g., a wired or wireless network, a memory storage device (e.g., a flash drive), etc.

At block 210, the computer 100 evaluates characteristics of the binary file 115. The processor 110 may execute instructions to access the metadata, determine the characteristics of the binary file 115 from the metadata, and evaluate the characteristics of the binary file 115. The processor 110 may access metadata, stored in the memory 105, about the binary file 115. According to the present invention, the metadata includes the cyclomatic complexity of the computer code represented by the binary file 115. The metadata may include characteristics of the binary file 115 such as the code size of the binary file 115, the amount of data processing involved with the binary file 115, a count of the number of insecure APIs used in the binary file 115, a count of the number of conditional statements in the code represented by the binary file 115, etc. In some instances, evaluating the characteristics of the binary file 115 may include the processor 110 executing instructions to determine one or more of the characteristics of the binary file 115 and storing the characteristics as data or metadata in the memory 105.

At block 215, the computer 100 determines a security risk associated with the binary file 115. The processor 110, for instance, may determine the security risk associated with the binary file 115 based on the characteristics, data stored in the CVE database 120, or both. As explained above, the CVE database 120 is a software file including electronic data representing known security vulnerabilities associated with using certain APIs, software libraries, etc. With regard to the characteristics, the processor 110 is programmed to evaluate the cyclomatic complexity of the binary file 115 according to the present invention. The processor 110 may be programmed to evaluate the code size, data size, the number of insecure application programming interfaces (APIs), and the number of conditional statements . As previously discussed, a large code size has a larger attack surface, which suggests a higher likelihood of a security vulnerability. For data size, the number of constants and variables referenced by a function can indicate how much data processing will take place. More data processing may indicate greater exposure to security risks. The number of insecure APIs can indicate the risk for vulnerability based on, e.g., the number of processing strings, memory usage, and inputs/outputs used by the insecure API. Insight into the number of conditions or decisions that are being made can also indicate the security risk since, e.g., more conditions or decisions can indicate a higher security risk. Moreover, because cyclomatic complexity is a quantitative software metric that can be used to indicate the complexity of a program based on, e.g., the number of linearly independent paths through a program's source code, a greater cyclomatic complexity can represent a greater likelihood of a security vulnerability in a binary file 115. The processor 110 may consider these characteristics and the data stored in the CVE database 120 to determine the vulnerability of the binary file 115 to a security risk.

At block 220, the computer 100 generates the risk assessment file 125. The risk assessment file 125 is a software file that includes data representing metrics associated with the security risk posed by the binary file 115. The processor 110 may generate the risk assessment file 125 according to the security risk posed by the binary file 115 in view of the characteristics, the data from the CVE database 120, or a combination of both. That is, the processor 110 may determine metrics defining how vulnerable the binary file 115 is to a security threat. The processor 110 may generate the risk assessment file 125 to reflect the metrics, the vulnerability of the binary file 115 to a security threat, or both. Further, in some instances, generating the risk assessment file 125 may include the processor 110 storing the metrics and risk assessment file 125 in the memory 105, displaying the metrics, outputting the risk assessment file 125, etc. Outputting the risk assessment file 125 may include the processor 110 executing instructions to electronically transmit the risk assessment file 125 via a wired or wireless network, store the risk assessment file 125 to a memory storage device (such as a flash drive) connected to the computer 100, etc.

In general, the computing systems and/or devices described may employ any of a number of computer operating systems, including, but by no means limited to, versions and/or varieties of the Microsoft Windows^{®} operating system, the Unix operating system (e.g., the Solaris^{®} operating system distributed by Oracle Corporation of Redwood Shores, California), the AIX UNIX operating system distributed by International Business Machines of Armonk, New York, the Linux operating system, the OS X, macOS, and iOS operating systems distributed by Apple Inc. of Cupertino, California, the BlackBerry OS operating system distributed by Blackberry, Ltd. of Waterloo, Canada, and the Android operating system developed by Google, Inc. and the Open Handset Alliance. Examples of computing devices include, without limitation, a computer workstation, a server, a desktop, notebook, laptop, or handheld computer, or some other computing system and/or device.

Computing devices generally include computer-executable instructions, where the instructions may be executable by one or more computing devices such as those listed above. Computer-executable instructions may be compiled or interpreted from computer programs created using a variety of programming languages and/or technologies, including, without limitation, and either alone or in combination, Java^{™}, C, C++, Visual Basic, Java Script, Perl, etc. Some of these applications may be compiled and executed on a virtual machine, such as the Java Virtual Machine, the Dalvik virtual machine, or the like. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of computer-readable media.

A computer-readable medium (also referred to as a processor-readable medium) includes any non-transitory (e.g., tangible) medium that participates in providing data (e.g., instructions) that may be read by a computer (e.g., by a processor of a computer). Such a medium may take many forms, including, but not limited to, non-volatile media and volatile media. Non-volatile media may include, for example, optical or magnetic disks and other persistent memory. Volatile media may include, for example, dynamic random access memory (DRAM), which typically constitutes a main memory. Such instructions may be transmitted by one or more transmission media, including coaxial cables, copper wire and fiber optics, including the wires that comprise a system bus coupled to a processor of a computer. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, or any other medium from which a computer can read.

Databases, data repositories or other data stores described herein may include various kinds of mechanisms for storing, accessing, and retrieving various kinds of data, including a hierarchical database, a set of files in a file system, an application database in a proprietary format, a relational database management system (RDBMS), etc. Each such data store is generally included within a computing device employing a computer operating system such as one of those mentioned above, and are accessed via a network in any one or more of a variety of manners. A file system may be accessible from a computer operating system, and may include files stored in various formats. An RDBMS generally employs the Structured Query Language (SQL) in addition to a language for creating, storing, editing, and executing stored procedures, such as the PL/SQL language mentioned above.

In some examples, system elements may be implemented as computer-readable instructions (e.g., software) on one or more computing devices (e.g., servers, personal computers, etc.), stored on computer readable media associated therewith (e.g., disks, memories, etc.). A computer program product may comprise such instructions stored on computer readable media for carrying out the functions described herein.

## Claims

1. A computer (100) comprising:
a memory (105); and
a processor (110) programmed to execute instructions stored in the memory (105), the instructions including processing a binary file (115) to determine a security risk associated with the binary file (115), wherein processing the binary file (115) includes determining a characteristic from metadata of the binary file and wherein the security risk associated with the binary file (115) is based at least in part on the characteristic from metadata of the binary file,
wherein processing the binary file (115) includes analyzing binary components of the binary file to determine a count of a number of insecure application programming interfaces used in the binary file and a cyclomatic complexity of the binary file;
wherein the characteristic includes the cyclomatic complexity of the binary file, and the characteristic includes the count of the number of insecure application programming interfaces used in the binary file, and wherein the processor is programmed to determine the security risk based at least in part on the cyclomatic complexity of the binary file and based at least in part on the number of insecure application programming interfaces used in the binary file;
and the metadata includes the count of the number of insecure application programming interfaces used in the binary file, and the cyclomatic complexity of the binary file.

2. The computer of claim 1, wherein the characteristic further includes one or more of:
a data size representing an amount of data processing involved with the binary file, and wherein the processor is programmed to determine the security risk based at least in part on the data size of the binary file;
a count of a number of conditional statements executed by computer code represented by the binary file, and wherein the processor is programmed to determine the security risk based at least in part on the number of conditional statements; and
a code size of the binary file, and wherein the processor is programmed to determine the security risk based at least in part on the code size of the binary file.

3. The computer of any preceding claim, wherein the instructions include compiling computer code to generate the binary file from the computer code.

4. The computer of any preceding claim, wherein the instructions further include receiving data from a common vulnerability exposure database, and wherein determining the security risk associated with the binary file includes determining the security risk based at least in part on the data received from the common vulnerability exposure database.

5. The computer of any preceding claim, wherein the instructions further include generating a risk assessment file representing the security risk of the binary file.

6. The computer of claim 5, wherein the instructions further include developing metrics associated with the security risk of the binary file, and wherein the risk assessment file includes the metrics.

7. A method comprising:
processing a binary file to determine a characteristic of the binary file; and
determining a security risk associated with the binary file based at least in part on the characteristic of the binary file,
wherein processing the binary file (115) includes analyzing binary components of the binary file to determine a count of a number of insecure application programming interfaces used in the binary file and a cyclomatic complexity of the binary file;
wherein the characteristic includes the cyclomatic complexity of the binary file, and the characteristic includes the count of the number of insecure application programming interfaces used in the binary file, and wherein the security risk is based at least in part on the cyclomatic complexity of the binary file and based at least in part on the number of insecure application programming interfaces used in the binary file;
and the metadata includes the count of the number of insecure application programming interfaces used in the binary file, and the cyclomatic complexity of the binary file.

8. The method of claim 7, wherein the characteristic further includes one or more of:
a data size representing an amount of data processing involved with the binary file, and wherein the security risk is based at least in part on the data size of the binary file.
a count of a number of conditional statements executed by computer code represented by the binary file, and wherein the security risk is based at least in part on the number of conditional statements; and
a code size of the binary file, and wherein the security risk is based at least in part on the code size of the binary file .

9. The method of any one of claims 7 to 8, further comprising:
receiving computer code; and
compiling the computer code to generate the binary file.

10. The method of any one of claims 7 to 9, further comprising receiving data from a common vulnerability exposure database, and wherein determining the security risk associated with the binary file includes determining the security risk based at least in part on the data received from the common vulnerability exposure database.

11. The method of any one of claims 7 to 10, further comprising generating a risk assessment file representing the security risk of the binary file.

12. The method of claim 11, further comprising developing metrics associated with the security risk of the binary file, and wherein generating the risk assessment file includes generating the risk assessment file to include the metrics.

13. A computer program which when executed on a processor of a computer is configured to carry out the method of any one of claims 7 to 12.

## Patentansprüche

1. Ein Computer (100), der Folgendes beinhaltet:
einen Speicher (105); und
einen Prozessor (110), der programmiert ist, um Anweisungen auszuführen, die in dem Speicher (105) gespeichert sind, wobei die Anweisungen das Verarbeiten einer binären Datei (115) umfassen, um ein Sicherheitsrisiko zu bestimmen, das mit der binären Datei (115) assoziiert ist, wobei das Verarbeiten der binären Datei (115) das Bestimmen einer Charakteristik aus Metadaten der binären Datei beinhaltet und wobei das Sicherheitsrisiko, das mit der binären Datei (115) assoziiert ist, zumindest teilweise auf der Charakteristik aus Metadaten der binären Datei basiert,
wobei das Verarbeiten der binären Datei (115) das Analysieren von binären Komponenten der binären Datei beinhaltet, um eine Zählung einer Anzahl von unsicheren Anwendungsprogrammierschnittstellen, die in der binären Datei verwendet werden, und eine zyklomatische Komplexität der binären Datei zu bestimmen;
wobei die Charakteristik die zyklomatische Komplexität der binären Datei beinhaltet und die Charakteristik die Zählung der Anzahl von unsicheren Anwendungsprogrammierschnittstellen umfasst, die in der binären Datei verwendet werden, und wobei der Prozessor programmiert ist, um das Sicherheitsrisiko zu bestimmen, das zumindest teilweise auf der zyklomatischen Komplexität der binären Datei basiert und zumindest teilweise auf der Anzahl von unsicheren Anwendungsprogrammierschnittstellen basiert, die in der binären Datei verwendet werden;
und die Metadaten die Zählung der Anzahl von unsicheren Anwendungsprogrammierschnittstellen, die in der binären Datei verwendet werden, und die zyklomatische Komplexität der binären Datei umfassen.

2. Computer gemäß Anspruch 1, wobei die Charakteristik ferner eines oder mehrere der Folgenden umfasst:
eine Datengröße, die eine Menge an Datenverarbeitung darstellt, die an der binären Datei beteiligt ist, und wobei der Prozessor programmiert ist, um das Sicherheitsrisiko zu bestimmen, das zumindest teilweise auf der Datengröße der binären Datei basiert;
eine Zählung einer Anzahl von bedingten Aussagen, die durch Computercode ausgeführt werden, der durch die binäre Datei dargestellt wird, und wobei der Prozessor programmiert ist, um das Sicherheitsrisiko zu bestimmen, das zumindest teilweise auf der Anzahl von bedingten Aussagen basiert; und
eine Codegröße der binären Datei, und wobei der Prozessor programmiert ist, um das Sicherheitsrisiko zu bestimmen, das zumindest teilweise auf der Codegröße der binären Datei basiert.

3. Computer gemäß einem der vorhergehenden Ansprüche, wobei die Anweisungen das Kompilieren von Computercode umfassen, um die binäre Datei aus dem Computercode zu erzeugen.

4. Computer gemäß einem der vorhergehenden Ansprüche, wobei die Anweisungen ferner das Empfangen von Daten aus einer Datenbank für gemeinsame Verletzungsexpositionen umfassen, und wobei das Bestimmen des Sicherheitsrisikos, das mit der binären Datei assoziiert ist, das Bestimmen des Sicherheitsrisikos umfasst, das zumindest teilweise auf den Daten basiert, die aus der Datenbank für gemeinsame Verletzungsexpositionen empfangen werden.

5. Computer gemäß einem der vorhergehenden Ansprüche, wobei die Anweisungen ferner das Erzeugen einer Risikobewertungsdatei umfassen, die das Sicherheitsrisiko der binären Datei darstellt.

6. Computer gemäß Anspruch 5, wobei die Anweisungen ferner das Entwickeln von Metriken umfassen, die mit dem Sicherheitsrisiko der binären Datei assoziiert sind, und wobei die Risikobewertungsdatei die Metriken umfasst.

7. Ein Verfahren, das Folgendes beinhaltet:
Verarbeiten einer binären Datei, um eine Charakteristik der binären Datei zu bestimmen; und
Bestimmen eines Sicherheitsrisikos, das mit der binären Datei assoziiert ist, das zumindest teilweise auf der Charakteristik der binären Datei basiert,
wobei das Verarbeiten der binären Datei (115) das Analysieren von binären Komponenten der binären Datei umfasst, um eine Zählung einer Anzahl von unsicheren Anwendungsprogrammierschnittstellen, die in der binären Datei verwendet werden, und eine zyklomatische Komplexität der binären Datei zu bestimmen;
wobei die Charakteristik die zyklomatische Komplexität der binären Datei beinhaltet und die Charakteristik die Zählung der Anzahl von unsicheren Anwendungsprogrammierschnittstellen umfasst, die in der binären Datei verwendet werden, und wobei das Sicherheitsrisiko zumindest teilweise auf der zyklomatischen Komplexität der binären Datei basiert und zumindest teilweise auf der Anzahl von unsicheren Anwendungsprogrammierschnittstellen basiert, die in der binären Datei verwendet werden;
und die Metadaten die Zählung der Anzahl von unsicheren Anwendungsprogrammierschnittstellen, die in der binären Datei verwendet werden, und die zyklomatische Komplexität der binären Datei umfassen.

8. Verfahren gemäß Anspruch 7, wobei die Charakteristik ferner eines oder mehrere der Folgenden umfasst:
eine Datengröße, die eine Menge an Datenverarbeitung darstellt, die an der binären Datei beteiligt ist,
und wobei das Sicherheitsrisiko zumindest teilweise auf der Datengröße der binären Datei basiert,
eine Zählung einer Anzahl von bedingten Aussagen, die durch Computercode ausgeführt werden, der durch die binäre Datei dargestellt wird, und wobei das Sicherheitsrisiko zumindest teilweise auf der Anzahl von bedingten Aussagen basiert; und
eine Codegröße der binären Datei, und wobei das Sicherheitsrisiko zumindest teilweise auf der Codegröße der binären Datei basiert.

9. Verfahren gemäß einem der Ansprüche 7 bis 8, das ferner Folgendes beinhaltet:
Empfangen von Computercode; und
Kompilieren des Computercodes, um die binäre Datei zu erzeugen.

10. Verfahren gemäß einem der Ansprüche 7 bis 9, das ferner das Empfangen von Daten aus einer Datenbank für gemeinsame Verletzungsexpositionen beinhaltet, und wobei das Bestimmen des Sicherheitsrisikos, das mit der binären Datei assoziiert ist, das Bestimmen des Sicherheitsrisikos umfasst, das zumindest teilweise auf den Daten basiert, die aus der Datenbank für gemeinsame Verletzungsexpositionen empfangen werden.

11. Verfahren gemäß einem der Ansprüche 7 bis 10, das ferner das Erzeugen einer Risikobewertungsdatei beinhaltet, die das Sicherheitsrisiko der binären Datei darstellt.

12. Verfahren gemäß Anspruch 11, das ferner das Entwickeln von Metriken beinhaltet, die mit dem Sicherheitsrisiko der binären Datei assoziiert sind, und wobei das Erzeugen der Risikobewertungsdatei das Erzeugen der Risikobewertungsdatei umfasst, um die Metriken zu umfassen.

13. Ein Computerprogramm, das, wenn es auf einem Prozessor eines Computers ausgeführt wird, konfiguriert ist, um das Verfahren gemäß einem der Ansprüche 7 bis 12 auszuführen.

## Revendications

1. Un ordinateur (100) comprenant :
une mémoire (105) ; et
un processeur (110) programmé de façon à exécuter des instructions stockées dans la mémoire (105), les instructions incluant le traitement d'un fichier binaire (115) de façon à déterminer un risque de sécurité associé au fichier binaire (115), où le traitement du fichier binaire (115) inclut la détermination d'une caractéristique à partir de métadonnées du fichier binaire et où le risque de sécurité associé au fichier binaire (115) est basé au moins en partie sur la caractéristique issue des métadonnées du fichier binaire,
où le traitement du fichier binaire (115) inclut l'analyse de composants binaires du fichier binaire de façon à déterminer un décompte d'un nombre d'interfaces de programmation d'application non sécurisées utilisées dans le fichier binaire et une complexité cyclomatique du fichier binaire ;
où la caractéristique inclut la complexité cyclomatique du fichier binaire, et la caractéristique inclut le décompte du nombre d'interfaces de programmation d'application non sécurisées utilisées dans le fichier binaire, et où le processeur est programmé de façon à déterminer le risque de sécurité sur la base au moins en partie de la complexité cyclomatique du fichier binaire et sur la base au moins en partie du nombre d'interfaces de programmation d'application non sécurisées utilisées dans le fichier binaire ;
et les métadonnées incluent le décompte du nombre d'interfaces de programmation d'application non sécurisées utilisées dans le fichier binaire, et la complexité cyclomatique du fichier binaire.

2. L'ordinateur de la revendication 1, où la caractéristique inclut en outre un ou plusieurs éléments parmi :
une taille de données représentant une quantité de traitement de données impliquée dans le fichier binaire, et où le processeur est programmé de façon à déterminer le risque de sécurité sur la base au moins en partie de la taille de données du fichier binaire ;
un décompte d'un nombre de déclarations conditionnelles exécutées par un code informatique représenté par le fichier binaire, et où le processeur est programmé de façon à déterminer le risque de sécurité sur la base au moins en partie du nombre de déclarations conditionnelles ; et
une taille de code du fichier binaire, et où le processeur est programmé de façon à déterminer le risque de sécurité sur la base au moins en partie de la taille de code du fichier binaire.

3. L'ordinateur de n'importe quelle revendication précédente, où les instructions incluent la compilation de code informatique de façon à générer le fichier binaire à partir du code informatique.

4. L'ordinateur de n'importe quelle revendication précédente, où les instructions incluent en outre la réception de données en provenance d'une base de données de vulnérabilités et expositions courantes, et où la détermination du risque de sécurité associé au fichier binaire inclut la détermination du risque de sécurité sur la base au moins en partie des données reçues en provenance de la base de données de vulnérabilités et expositions courantes.

5. L'ordinateur de n'importe quelle revendication précédente, où les instructions incluent en outre la génération d'un fichier d'évaluation de risque représentant le risque de sécurité du fichier binaire.

6. L'ordinateur de la revendication 5, où les instructions incluent en outre le développement de mesures associées au risque de sécurité du fichier binaire, et où le fichier d'évaluation de risque inclut les mesures.

7. Un procédé comprenant :
le traitement d'un fichier binaire de façon à déterminer une caractéristique du fichier binaire ; et
la détermination d'un risque de sécurité associé au fichier binaire sur la base au moins en partie de la caractéristique du fichier binaire,
où le traitement du fichier binaire (115) inclut l'analyse de composants binaires du fichier binaire de façon à déterminer un décompte d'un nombre d'interfaces de programmation d'application non sécurisées utilisées dans le fichier binaire et une complexité cyclomatique du fichier binaire ;
où la caractéristique inclut la complexité cyclomatique du fichier binaire, et la caractéristique inclut le décompte du nombre d'interfaces de programmation d'application non sécurisées utilisées dans le fichier binaire, et où le risque de sécurité est basé au moins en partie sur la complexité cyclomatique du fichier binaire et basé au moins en partie sur le nombre d'interfaces de programmation d'application non sécurisées utilisées dans le fichier binaire ;
et les métadonnées incluent le décompte du nombre d'interfaces de programmation d'application non sécurisées utilisées dans le fichier binaire, et la complexité cyclomatique du fichier binaire.

8. Le procédé de la revendication 7, où la caractéristique inclut en outre un ou plusieurs éléments parmi :
une taille de données représentant une quantité de traitement de données impliquée dans le fichier binaire, et où le risque de sécurité est basé au moins en partie sur la taille de données du fichier binaire,
un décompte d'un nombre de déclarations conditionnelles exécutées par un code informatique représenté par le fichier binaire, et où le risque de sécurité est basé au moins en partie sur le nombre de déclarations conditionnelles ; et
une taille de code du fichier binaire, et où le risque de sécurité est basé au moins en partie sur la taille de code du fichier binaire.

9. Le procédé de l'une quelconque des revendications 7 à 8, comprenant en outre :
la réception d'un code informatique ; et
la compilation du code informatique de façon à générer le fichier binaire.

10. Le procédé de l'une quelconque des revendications 7 à 9, comprenant en outre la réception de données en provenance d'une base de données de vulnérabilités et expositions courantes, et où la détermination du risque de sécurité associé au fichier binaire inclut la détermination du risque de sécurité sur la base au moins en partie des données reçues en provenance de la base de données de vulnérabilités et expositions courantes.

11. Le procédé de l'une quelconque des revendications 7 à 10, comprenant en outre la génération d'un fichier d'évaluation de risque représentant le risque de sécurité du fichier binaire.

12. Le procédé de la revendication 11, comprenant en outre le développement de mesures associées au risque de sécurité du fichier binaire, et où la génération du fichier d'évaluation de risque inclut la génération du fichier d'évaluation de risque de façon à inclure les mesures.

13. Un programme informatique qui, lorsqu'il est exécuté sur un processeur d'un ordinateur, est configuré de façon à mettre en oeuvre le procédé de l'une quelconque des revendications 7 à 12.
